(19) Europäisches Patentamt

European Patent Office

Office européen des brevets

(11) **EP 1 321 933 A2**

(12) **EUROPEAN PATENT APPLICATION**

(43) Date of publication:
**25.06.2003 Bulletin 2003/26**

(51) Int Cl.[7]: **G11B 7/135**

(21) Application number: **02258717.4**

(22) Date of filing: **18.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO**<br><br>(30) Priority: **21.12.2001 JP 2001389984**<br>         **01.11.2002 JP 2002320391**<br><br>(71) Applicant: **Konica Corporation**<br>**Tokyo (JP)** | (72) Inventor: **Ikenaka, Kiyono, Konica Corporation**<br>**Hachioji-shi, Tokyo 192-8505 (JP)**<br><br>(74) Representative: **Nicholls, Michael John**<br>**J.A. KEMP & CO.**<br>**14, South Square**<br>**Gray's Inn**<br>**London WC1R 5JJ (GB)** |

(54) **Optical pickup apparatus and optical element**

(57)     An optical element for use in an optical pickup apparatus for converging a light flux onto an information recording plane of an optical information recording medium, is provided with an optical path difference providing section divided coaxially around an optical axis so as to form a plurality of ring-shaped zones and a refracting section having a refracting function of optimizing a spherical aberration of a converged light spot of a light flux. The optical element converges a light flux having the operating reference wavelength $\lambda_0$ onto the information recording plane with almost no aberration under an operating reference temperature $T_0$, and the optical element converges a light flux having an operating wavelength $\lambda$ different from the operating reference wavelength $\lambda_0$ onto the information recording plane with a wavefront aberration of $0.14\lambda$rms or less under an operating temperature T ($|T - T_0| < 60$ [°C]).

FIG. 1

OPTICAL PATH OF LIGHT RAY
BY REFRACTIVE FUNCTION

OPTICAL PATH OF LIGHT RAY BY REFRACTIVE
FUNCTION AND OPTICAL PATH DIFFERENCE
PROVIDING FUNCTION

**Description**

The present invention relates to an optical pickup apparatus by which a light flux is converged onto an information recording surface of an optical information recording medium, and to an optical element (lens) used for the optical pickup apparatus (for example, disclosed in TOKKAIHEI 11-287948).

The optical pickup apparatus for recording the data on the optical disk (optical information recording medium) such as MO, CD or DVD and for reproducing it, is developed and used for various applications.

In these optical pickup apparatus, the laser light flux (light flux) whose wave front is arranged uniformly is used, and a lens (optical element) for converging this laser light flux onto the recording surface of the optical information recording medium in the situation in which there is no aberration, and for forming the light converged light spot, is used. It is preferable that, in the aspect that the cost for the material or its molding is small, this lens is formed of plastic rather than the glass.

Herein, the optical pickup apparatus is exposed to the change of temperature due to the variation of the atmospheric temperature of its arranged place or the heat generation of the apparatus in the operation time.

When the temperature of the optical pickup apparatus is increased, generally, the wavelength of the laser light flux emitted from the laser oscillator is increased. Further, the plastic lens has the characteristic that the refractive index is lowered, when its temperature is increased. From these 2 factors, when the temperature is increased from the operation reference temperature $T_0$ assumed when the optical pickup apparatus is designed, the focal distance of the optical system of the optical pickup apparatus is increased, and the light converged light spot is dislocated from the recording surface of the optical information recording medium (the light ray aberration is generated) and together with that, the wave front aberration in the light converged light spot is increased, and reading and writing of the data onto the optical information recording medium is disturbed.

Because the change of the temperature of the optical pickup apparatus is not quickly generated, the plastic lens is moved by the actuator in the optical axis direction corresponding to the change of the temperature, and on the information recording surface of the optical information recording medium, the wave front aberration of the converged light spot can be made minimum.

However, it is necessary that the minimum value of this wave front aberration is suppressed under a constant value necessary for recording and reproducing the data onto the optical information recording medium. When the change of the temperature is not larger than 0.014 λ rms, in the range of 60 °C of the upper and lower side of the operating reference temperature $T_0$, in the range of 30 °C of the upper and lower side of the operating reference temperature $T_0$ assumed to be the operating reference temperature of the actual operating circumstance, the minimum value of the wave front aberration is not larger than about 0.07 λrms. Preferably, in the range of 30 °C of the upper and lower side of the operating reference temperature $T_0$, the minimum value of the wave front aberration is not larger than 0.07 λ rms, and when it is such a wave front aberration of the converged light spot, the converged light spot adequate for the reading and writing of the optical information recording medium can be formed.

An object of the present invention is to provide an optical pickup apparatus by which, when the temperature of the optical pickup apparatus is changed with respect to the operating reference temperature $T_0$, the wave front aberration is suppressed, and the error at the time of the reading and writing of the data onto the optical information recording medium can be prevented, and an optical element used for the optical pickup apparatus.

The above object can be attained by the following structures.

A. An optical element used for an optical pickup apparatus by which the light flux is converged onto the information recording surface of the optical information recording medium, which has the following: an optical path difference proving function (a function of providing an optical path difference) which is structured by a plurality of ring-shaped zones which are divided into the concentric circles with respect to the optical axis, and which has the thickness respectively different in the optical axis direction, and the optical path length of the light ray passing a predetermined ring-shaped zone among the ring-shaped zones, is lengthened by about the integer times of the operating reference wavelength $λ_0$, than the optical path length of the light ray passing the other ring-shaped zone adjoining in the optical axis side to the predetermined ring-shaped zone; a refracting function by which the spherical aberration of the converged light spot in which the light flux of the operating reference wavelength $λ_0$ is converged onto the information recording surface, is made optimum; wherein the optical element is structured such that, in the operating reference temperature $T_0$, the light flux of the operating reference wavelength $λ_0$ is converged onto the information recording surface almost without the wave front aberration, and at the operating temperature T ($|T - T_0| < 60$ [°C] ) different from the operating reference temperature $T_0$, the light flux of the operating wavelength λ different from the operating reference wavelength $λ_0$, is converged onto the information recording surface so that the wave front aberration is not lager than 0.14 λrms.

B. An optical pickup apparatus by which the light flux is converged onto the information recording surface of the optical information recording medium, which has the following: the optical element arranged on the optical axis in the optical system; the optical element is structured by a plurality of ring-shaped zones which are divided into the concentric circles in the optical axis, and has the thickness respectively different in the optical axis; the optical path difference providing function by which the optical path length of the light ray passing the predetermined ring-shaped zone among the ring-shaped zones, is lengthened by about integer times of the operating reference wavelength $\lambda_0$ more than the optical path length of the light ray passing the other ring-shaped zone adjoining in the optical axis side to the predetermined ring-shaped zone; the refracting function by which the spherical aberration of the converged light spot in which the light flux of the operating reference wavelength $\lambda_0$ is converged onto the information recording surface, is made optimum; wherein the optical element is structured such that, in the operating reference temperature $T_0$, the light flux of the operating reference wavelength $\lambda_0$ is converged onto the information recording surface almost without the wave front aberration, and at the operating temperature T ($|T - T_0| < 60$ [°C]) different from the operating reference temperature $T_0$, the light flux of the operating wavelength $\lambda$ different from the operating reference wavelength $\lambda_0$, is converged onto the information recording surface so that the wave front aberration is not lager than 0.14 $\lambda$rms.

The present invention will be further described by way of example with reference to the accompanying drawings, in which:

Fig. 1 is an outline view of the optical path of the light ray by the refracting function of the first optical element and the second optical element or the optical element according to the present invention, and the optical path of the light ray by the optical path difference providing function and the refracting function.

Fig. 2 is an outline view of the overall structure of an example of the optical pickup apparatus according to the present invention.

Fig. 3 is an outline view of the overall structure of another example of an optical pickup apparatus according to the present invention.

Fig. 4 is a side view showing the outline of an example of the first optical element and the second optical element or the optical element according to the present invention, in the optical pickup apparatus according to the present invention.

Fig. 5 is a front view showing the outline of an example of the first optical element and the second optical element or the optical element according to the present invention, in the optical pickup apparatus according to the present invention.

Fig. 6 is a longitudinal spherical aberration view by the refracting function when the light flux of the operating reference wavelength $\lambda_0$ comes to be incident on the multi-ring-shaped zone phase difference lens which is an example of the first optical element in an example of the optical pickup apparatus according to the present invention or an example of the optical element according to the present invention.

Fig. 7 is a longitudinal spherical aberration view by the optical path difference proving function and the refracting function when the light flux of the operating reference wavelength $\lambda_0$ comes to be incident on the multi-ring-shaped zone phase difference lens which is an example of the first optical element and the second optical element in an example of the optical pickup apparatus according to the present invention or an example of the optical element according to the present invention.

Fig. 8 is a view showing the wave front aberration in the converged light spot when the light flux of the operating wavelength $\lambda$ comes to be incident on the multi-ring-shaped zone phase difference lens which is an example of the first optical element and the second optical element or the optical element according to the present invention, in the operating temperature T of the range of the operating reference temperature $T_0 \pm 60$ °C.

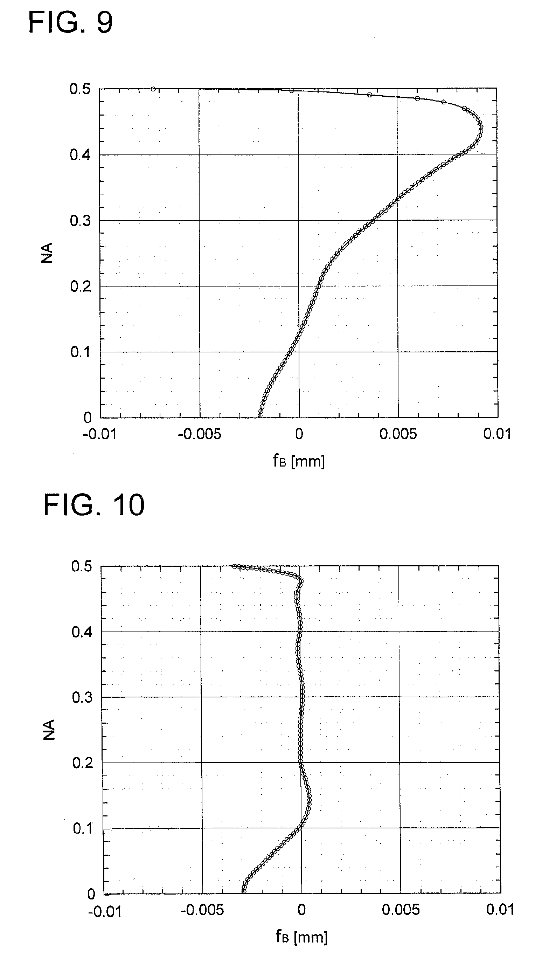

Fig. 9 is the longitudinal spherical aberration view by the refracting function when the light flux of the operating reference wavelength $\lambda_0$ which is emitted in the inclination angle range of 12.5 degrees to the optical axis from the light source arranged on the optical axis comes to be incident on the multi-ring-shaped zone phase difference lens which is another example of the first optical element and the second optical element in another example of the optical pickup apparatus according to the present invention or another example of the optical element according to the present invention.

Fig. 10 is the longitudinal spherical aberration view by the optical path difference providing function and the refracting function when the light flux of the operating reference wavelength $\lambda_0$ which is emitted in the inclination angle range of 12.5 degrees to the optical axis from the light source arranged on the optical axis comes to be incident on the multi-ring-shaped zone phase difference lens which is another example of the first optical element and the second optical element in another example of the optical pickup apparatus according to the present invention or another example of the optical element according to the present invention.

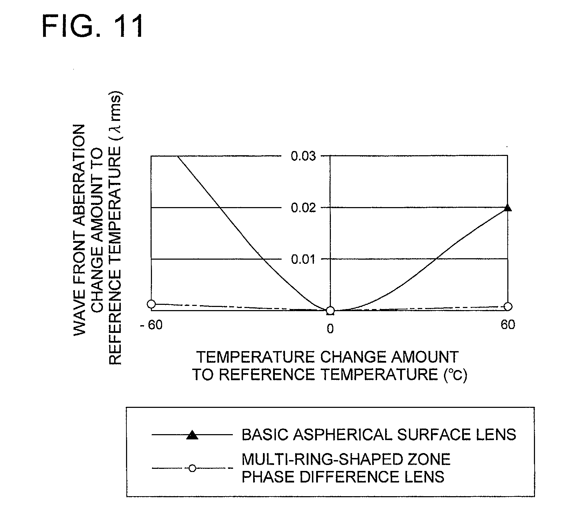

Fig. 11 is a view showing the wave front aberration in the converged light spot when the light flux of the operating wavelength $\lambda$ emitted from the light source arranged on the optical axis to the optical axis in the inclination angle range of 12.5 degrees, comes to be incident on the multi-ring-shaped zone phase difference lens which is an example of the second optical element in another example of the optical pickup apparatus according to the present invention or an example of the optical element according to the present invention, in the operating temperature T in the range of the operating reference temperature $T_0 \pm 60\ ^{\circ}$C.

Fig. 12 is a view showing an example structured by 2 optical elements.

Fig. 13 is a sectional view of an objective lens for the definite light/infinite light for the DVD/CD interchanging.

Fig. 14 is an outline view of an optical pickup apparatus in which the objective lens in Fig. 13 is assembled, and the infinite light is used.

Fig. 15 is an outline view of the optical pickup apparatus in which the objective lens in Fig. 13 is assembled, and the definite light is used.

Initially, the preferred example of the present invention will be described below.

(1) An optical pickup apparatus by which the light flux is converged onto the information recording surface of the optical information recording medium, which is characterized in that: it has the first optical element having an optical path difference providing function which is arranged on the optical axis in the optical system of this optical pickup apparatus, and divided into a plurality of ring-shaped zones by concentric circles around the optical axis, and each of these ring-shaped zones is formed so that it has respectively different thickness in the optical axis direction, and by which the optical path length of the light ray passing certain one ring-shaped zone is lengthened more than the optical path length of the light ray passing another ring-shaped zone which adjoins this ring-shaped zone and is closer to the optical axis than this ring-shaped zone, by almost the integer times of the operating reference wavelength $\lambda_0$; and the second optical element having a refracting function which is arranged on the optical axis of the optical system and by which the spherical aberration of the converged light spot formed on the information recording surface when the light flux of the operating reference wavelength $\lambda_0$ comes to be incident is made optimum; and at the operating reference temperature $T_0$, the light flux of the operating reference wavelength $\lambda_0$ is converged on the information recording surface almost without aberration, and at the operating temperature T ($|T - T_0| < 60$ [$^{\circ}$C] ) different from the operating reference temperature $T_0$, the wave front aberration in the converged light spot formed by the light flux of the operating wavelength $\lambda$ different from the operating reference wavelength $\lambda_0$, is not larger than 0.14 $\lambda$rms.

(2) An optical pickup apparatus by which the light flux is converged onto the information recording surface of the optical information recording medium, which is characterized in that: it has the first optical element having an optical path difference providing function which is arranged on the optical axis in the optical system of this optical pickup apparatus, and divided into a plurality of ring-shaped zones by concentric circles around the optical axis, and each of these ring-shaped zones is formed so that it has respectively different thickness in the optical axis direction, and by which the optical path length of the light ray passing certain one ring-shaped zone is lengthened more than the optical path length of the light ray passing another ring-shaped zone which adjoins this ring-shaped zone and is closer to the optical axis than this ring-shaped zone, by almost the integer times of the operating reference wavelength $\lambda_0$; and the second optical element having a refracting function which is arranged on the optical axis of the optical system and by which the spherical aberration of the converged light spot formed on the information recording surface when the light flux of the operating reference wavelength $\lambda_0$ comes to be incident is made optimum; and at the operating reference temperature $T_0$, the light flux of the operating reference wavelength $\lambda_0$ is converged on the information recording surface almost without aberration, and at the operating temperature T ($|T - T_0| < 30$ [$^{\circ}$C]) different from the operating reference temperature $T_0$, the wave front aberration in the converged light spot formed by the light flux of the operating wavelength $\lambda$ different from the operating reference wavelength $\lambda_0$, is not larger than 0.07 $\lambda$rms.

Herein, the operating reference temperature $T_0$ is the normal temperature (about 10 - 40 $^{\circ}$C) in the temperature change range of the circumstance in which the optical pickup apparatus is used. Further, the operating reference wavelength $\lambda_0$ is the wavelength of the light flux emitted from the light source to be used at the operating reference temperature $T_0$, and the operating wavelength $\lambda$ is the wavelength of the light flux emitted from the light source at the operating temperature T. Further, the first optical element and the second optical element are the optical element formed of the material, for example, such as plastic, in which the refractive index has the temperature dependency.

Further, "the optimum" called herein means that ray aberration is almost zero (the variation range of the longitudinal spherical aberration is not larger than 0.01 mm).

Further, "about integer times of the operating reference wavelength $\lambda_0$ (a value obtained by multiplying the operating reference wavelength $\lambda_0$ with an integer)" means, when the optical path difference providing amount is $\Delta$ L, and k is an arbitrary integer, the range of $(k - 0.2)\lambda_0 \leqq \Delta L \leqq (k + 0.2)\ \lambda_0$. Further, "converged onto the information recording surface almost without aberration" means "not larger than $0.030\ \lambda$ rms".

According to the example described in (1) or (2), when the light flux of the operating reference wavelength $\lambda_0$ comes to be incident at the operating reference temperature $T_0$, the phase difference given by the first optical element is almost none and the spherical aberration of a light flux converged by the refracting function of the second optical element (the second optical element section) is optimum. Accordingly, the light flux passing the first optical element and the second optical element is converged almost without aberration.

At the operating temperature T (in (1), $|T - T_0| < 60 \ [°C]$; in (2), $|T - T_0| < 30 \ [°C]$ ) different from the operating reference temperature $T_0$, when the light flux of the operating wavelength $\lambda$ different from the operating reference wavelength $\lambda_0$ comes to be incident, from the influence of the dispersion property of the second optical element and the temperature dependency of the refractive index of the second optical element, in the converged light spot by the optical system provided with the second optical element, the wave front aberration is generated. The relationship of the phase difference providing amount $\Psi(\lambda_0, T_0)$ by the optical path difference providing function of the first optical element and the difference d of the thickness in the optical axis direction of the ring-shaped zone is, when n $(\lambda_0, T_0)$ is the refractive index, and k is integer, expressed by the following expression:

$$[\text{Expression 1}] \ \Psi(\lambda_0, T_0) = \frac{2\pi(n(\lambda_0, T_0)-1)d}{\lambda_0} = 2\pi k$$

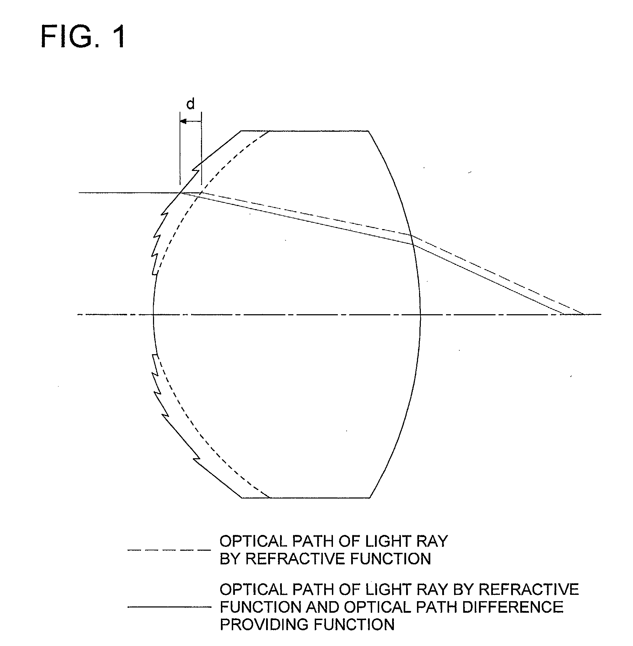

The difference d of the thickness of the ring-shaped zone called herein means, as shown in Fig. 1, the difference of the thickness in the optical axis direction between a certain ring-shaped zone and the extension of the first ring-shaped zone including the optical axis. The first ring-shaped zone is expressed by the aspheric surface expression, and is extended according to the expression. The changed amount $\Delta\Psi(T)$ of the phase difference providing amount, by the case where the temperature of circumstance in which the optical system is placed, and the wavelength of the light flux incident on the optical system are respectively changed from the operating reference temperature $T_0$ to the operating temperature T and from the operating reference wavelength $\lambda_0$ to the operating wavelength $\lambda$, is expressed by the following expression, by assuming that, when the temperature is increased by a unit temperature, the linear expansion coefficient of the optical element is $\alpha$, the changed amount of incident wavelength is $\beta$, the change of refractive index of the optical element (including the change of the refractive index by the changed amount $\beta$ of the incident wavelength) is $\gamma$.

$$[\text{Expression 2}] \ \Delta\Psi(T) = \Psi(\lambda_0, T_0)(\alpha - \frac{\beta}{\lambda_0} + \frac{\gamma}{n(\lambda_0, T_0)-1} \times (T-T_0) = k(\alpha - \frac{\beta}{\lambda 0} + \frac{\gamma}{n(\lambda_0, T_0)-1})\Delta T$$

$$(\Delta T = T - T_0, \alpha = \frac{1}{h}\frac{dh}{dT}, \beta = \frac{d\lambda}{dT}, \gamma = \frac{dn}{dT})$$

When the first optical element is formed of plastic, the difference d of the thickness of the ring-shaped zone of the first optical element tends to change by the thermal expansion, and thereby, the change is caused in the phase difference providing amount. However, the changed amount is so small that it can be neglected, as compared to the changed amount of the phase difference providing amount by the temperature dependency of the refractive index of the first optical element, or the changed amount of the phase difference proving amount by the temperature dependency of the incident wavelength.

In the direction in which the changed amount $\Delta\Psi(T)$ of the phase difference providing amount and the wave front aberration generated by the change of the refractive index of the second optical element are negated each other, as the result that the thickness of the ring-shaped zone of the first optical element is formed, the degree of freedom exists at the position on the optical axis at which the wave front aberration of the formed converged light spot becomes minimum. When the position is set to the under side more than the optimum converged light spot position when the operating reference wavelength $\lambda_0$ light flux comes to be incident at the operating reference temperature $T_0$, the phase difference given by the optical path difference providing function of the first optical element becomes long as the incident light flux becomes more distant from the optical axis. Further, the difference d of the thickness of the ring-shaped zone and the inner diameter and outer diameter in the vertical direction to the optical axis of each ringshaped zone are determined by the operating reference wavelength $\lambda_0$ of the target optical system, the material constituting the optical element, and the numerical aperture.

The "under" used herein means that, as the incident light ray is depart from the optical axis, the position at which the incident light ray crosses the optical axis gets near the second optical element. Herein, locally, or in the area of a portion in which the numerical aperture is high, a case where, at the distant side more than the optical element, it crosses the optical axis, is also included.

(3) In the optical pickup apparatus described in (1) or (2), it is characterized in that: the operating reference wavelength $\lambda_0$ is 700 nm < $\lambda_0$ < 800 nm.

According to the example described in (3), because the operating reference wavelength $\lambda_0$ is 700 nm < $\lambda_0$ < 800 nm, it is particularly adequate for reading and writing the data onto the CD-RW.

(4) In the optical pickup apparatus described in (3), it is characterized in that: the number of ring-shaped zones formed on the first optical element is any one of 3 - 60.

In the under side more than the optimum converged light spot when the light flux of the operating reference wavelength $\lambda_0$ comes to be incident at the operating reference temperature $T_0$, the wave front error generated by the refracting function at the time of the change of the temperature and wavelength is increased as the numerical aperture is increased. Herein, the "wave front error" is the difference between the dislocation of the wave front of the paraxial light ray and the dislocation of the wave front of the light ray corresponding to the specific numerical aperture.

When the numerical aperture is small, the number of ring-shaped zones necessary for correcting the wave front error is almost equal to the result in which the maximum value of the wave front error is divided by the changed amount $\Delta\Psi(T)$ of the phase difference providing amount. However, when the first optical element and the second optical element are integrally formed, particularly, as the numerical aperture is increased, the dislocation from the value is increased.

By making the wave front aberration when the wavelength is changed at the position of the converged light spot at which the wave front aberration is minimum when the light flux of the operating reference wavelength $\lambda_0$ comes to be incident, have the width in the range necessary for reading and writing the data onto the optical information recording medium, even when the number of ring-shaped zones is smaller than the number in which the maximum value of the wave front error is divided by the changed amount $\Delta\Psi(\lambda)$ of the phase difference providing amount, the reading error is not generated at the time of the temperature change. In order to read and write the data onto the CD-RW, it is preferable that the number of ring-shaped zones is 3 - 60. Further, generally, as the number of ring-shaped zones is small, the wave front aberration is increased, however, there is an advantage that the processing of the optical element becomes easy.

(5) In the optical pickup apparatus described in (3) or (4), it is characterized in that: the changing rate $d\lambda/dT$, $dn/dT$ by the temperature change of the wavelength $\lambda$ of the light flux incident on this optical system, and the refractive index n of the second optical element, are respectively,

$$0.05\ (\mathrm{nm}/^{\circ}\mathrm{C}) < d\lambda/dT < 0.5\ (\mathrm{nm}/^{\circ}\mathrm{C})$$

$$-0.0002\ (/^{\circ}\mathrm{C}) < dn/dT < -0.00005\ (/^{\circ}\mathrm{C}).$$

According to the example described in (5), because the changing rate $d\lambda/dT$, $dn/dT$ by the temperature change of the wavelength $\lambda$ of the light flux incident on this optical system, and the refractive index n of the second optical element, are respectively,

$$0.05\ (\mathrm{nm}/^{\circ}\mathrm{C}) < d\lambda/dT < 0.5\ (\mathrm{nm}/^{\circ}\mathrm{C})$$

$$-0.0002\ (/^{\circ}\mathrm{C}) < dn/dT < -0.00005\ (/^{\circ}\mathrm{C}),$$

the accuracy of the reading and writing of the information onto the optical information recording medium is more increased.

(6) In the optical pickup apparatus described in any one of (1) - (5), it is characterized in that: the first optical element and the second optical element are formed of plastic.

According to the example described in (6), the same effect as the example described in any one of (1) to (5) is obtained, and because the first optical element and the second element are formed of plastic, the first optical element and the second optical element can be easily molded, and the cost of the raw material is also lower than glass, and the weight is light, therefore, the optical pickup apparatus can be light, and low cost.

(7) An optical element used for the optical pickup apparatus by which the light flux is converged onto the information recording surface of the optical information recording medium, which is characterized in that: it has an optical path difference providing function which is arranged on the optical axis in the optical system of this optical pickup apparatus, and divided into a plurality of ring-shaped zones by concentric circles around the optical axis, and each of these ring-shaped zones is formed so that it has respectively different thickness in the optical axis direction, and by which the optical path length of the light ray passing certain one ring-shaped zone is lengthened more than the optical path length of the light ray passing another ring-shaped zone which adjoins this ring-shaped zone and is closer to the optical axis than this ring-shaped zone, by almost the integer times of the operating reference

wavelength $\lambda_0$; and a refracting function which is arranged on the optical axis of the optical system and by which the spherical aberration of the converged light spot formed on the information recording surface when the light flux of the operating reference wavelength $\lambda_0$ comes to be incident is made optimum; and at the operating reference temperature $T_0$, the light flux of the operating reference wavelength $\lambda_0$ passing this optical element is converged on the information recording surface almost without aberration, and at the operating temperature T ($|T - T_0| < 60$ [°C]) different from the operating reference temperature $T_0$, the wave front aberration in the converged light spot formed by the light flux of the operating wavelength $\lambda$ different from the operating reference wavelength $\lambda_0$ passing this optical element, is not larger than 0.14 $\lambda$rms.

(8) An optical element used for the optical pickup apparatus by which the light flux is converged onto the information recording surface of the optical information recording medium, which is characterized in that: it has an optical path difference providing function which is arranged on the optical axis in the optical system of this optical pickup apparatus, and divided into a plurality of ring-shaped zones by concentric circles around the optical axis, and each of these ring-shaped zones is formed so that it has respectively different thickness in the optical axis direction, and by which the optical path length of the light ray passing certain one ring-shaped zone is lengthened more than the optical path length of the light ray passing another ring-shaped zone which adjoins this ring-shaped zone and is closer to the optical axis than this ring-shaped zone, by almost the integer times of the operating reference wavelength $\lambda_0$; and a refracting function which is arranged on the optical axis of the optical system and by which the spherical aberration of the converged light spot formed on the information recording surface when the light flux of the operating reference wavelength $\lambda_0$ comes to be incident is made optimum; and at the operating reference temperature $T_0$, the light flux of the operating reference wavelength $\lambda_0$ passing this optical element is converged on the information recording surface almost without aberration, and at the operating temperature T ($|T - T_0| < 30$ [°C] ) different from the operating reference temperature $T_0$, the wave front aberration in the converged light spot formed by the light flux of the operating wavelength $\lambda$ different from the operating reference wavelength $\lambda_0$ passing this optical element, is not larger than 0.07 $\lambda$rms.

In the example described in (7) or (8), when the light flux of the operating reference wavelength $\lambda_0$ comes to be incident at the operating reference temperature $T_0$, it is designed so that the spherical aberration by the refracting function of this optical element is over. However, because this optical element has both of the refracting function and the optical path difference providing function, the same effect as the case where the thickness of the optical element is practically increased is generated. As shown in Fig. 1, as compared to the light ray passing the optical element provided with only the refracting function, the optical path length of the light ray passing the optical element provided with the refracting function and the optical pass difference providing function in the optical element is more increased, and as the result, the spherical aberration which is over by the refracting function of the optical element is subjected to the action which becomes under, and becomes almost no-aberration. "Over" used herein means that, as the incident light ray is apart from the optical axis, the position at which the incident light ray crosses the optical axis more approaches the optical element. Further, "under" used herein means the reversal of the "over", and that, as the incident light ray is apart from the optical axis, the position at which the incident light ray crosses the optical axis approaches the optical element. Herein, locally, or in the area of one portion in which the numerical aperture is high, the case where it crosses the optical axis at far side from the optical element, is also included.

In the optical element described in (7) or (8), in the relational expression of the phase difference providing amount by the optical path difference providing function and the difference d of the thickness in the optical axis direction of the ring-shaped zone, although a factor such as the refractive angle of the light ray incident on the entrance surface of the optical element is also included and the expression becomes complex, the basic technology is the same as the example described in (1) or (2).

There is a case where, when the surface shape of the aspheric surface having the refracting function is shifted in the optical axis direction simply by the optical path length difference, as the single optical element, the element having both the optical path difference providing function and refracting function is obtained. However, when the numerical aperture is increased, and the radius of the curvature of the surface of the optical element is decreased, because it is necessary that the optical path length is strictly considered, when the surface shape of the aspheric surface having the refracting function is only shifted by the optical path length difference in the optical axis direction, there is a case where the above-described function can not be attained. In such a case, by changing also the shape of the refracting surface to perform the refracting function, the optical element having both the optical path difference providing function and the refracting function is obtained.

In such a manner, when the wave front aberration at the position in the optical axis direction at which the wave front aberration of the converged light spot when the temperature of the circumstance in which the optical system is placed, or the wavelength incident on the optical system is changed, is minimum, is, in the example described in (7), not larger than 0.14 $\lambda$, and in the example described in (8), not larger than 0.07 $\lambda$, the intensity of the converged light spot can be made preferable for reading and writing the data onto the optical information recording medium.

(9) In the optical element described in (7) or (8), it is characterized in that: the operating reference wavelength $\lambda_0$ is 700 nm < $\lambda_0$ < 800 nm.

According to the example described in (9), the same effect as the example described in (3)is obtained.

(10) In the optical element described in (9), it is characterized in that: the number of ring-shaped zones formed on the optical element is any one of 3 - 60.

According to the example described in (10), the same effect as the example described in (4) is obtained.

(11) In the optical element described in (9) or (10), it is characterized in that: the light fluxes incident on this optical system are formed of the almost parallel rays of light to the optical axis, and in these light fluxes, the distance between the position at which the light ray passing the second optical element at the position most apart from the optical axis crosses the optical axis by the refracting function, and the position at which the paraxial light ray crosses the optical axis by the refracting function, is not larger than 0.03 mm.

Herein, "the light ray passing this optical element at the most apart position from the optical axis" shows the light ray corresponding to the numerical aperture of the optical element.

According to the example described in (11), the same effect as the example described in (9) or (10) is obtained, and the light fluxes incident on the optical element is formed of the almost parallel rays of light to the optical axis, and in these light fluxes, because the distance of the position at which the light ray passing the optical element at the position most apart from the optical axis crosses the optical axis by the refracting function, and the position at which the paraxial light ray crosses the optical axis by the refracting function, is not larger than 0.03 mm, when the light flux of the operating reference wavelength $\lambda_0$ comes to be incident at the operating reference temperature $T_0$, it becomes almost no-aberration by the optical path difference providing function and the refracting function. Further, when the light flux of the operating wavelength $\lambda$ different from the operating reference wavelength $\lambda_0$ comes to be incident at the operating reference temperature T ($|T - T_0|$ < 60 (°c) , or $|T - T_0|$ < 30 (°c)) different from the operating reference temperature $T_0$, by the optical path difference providing function and the refracting function, it becomes almost zero. Accordingly, it can be suppressed lower than the diffraction limit necessary for reading and writing the data onto the optical information recording medium.

(12) In the optical element described in (9)or (10), it is characterized in that: the incident angle of the light flux incident on this optical element is in the inclination angle range of 12.5 degrees to the optical axis, and in this light flux, the distance between the position at which the light ray passing the optical element at the position most apart from the optical axis crosses the optical axis by the refracting function, and the position at which the paraxial light ray crosses the optical axis by the refracting function, is not larger than 0.02 mm. Herein, "the light ray passing this optical element at the position most apart from the optical axis" shows the light ray corresponding to the numerical aperture of the optical element.

According to the example described in (12), the same effect as the example described in (9) or (10) is obtained, and the light flux incident on the optical element is formed of the light ray emitted from the light source positioned on the optical axis to the optical axis in the inclination angle range of 12.5 degrees, and in this light flux, because the distance between the position at which the light ray passing the optical element at the position most apart from the optical axis crosses the optical axis by the refracting function, and the position at which the paraxial light ray crosses the optical axis by the refracting function, is not larger than 0.02 mm, when the light flux of the operating reference wavelength $\lambda_0$ comes to be incident at the operating reference temperature $T_0$, by the optical path difference providing function and the refracting function, it becomes almost zero. Further, when the light flux of the operating wavelength $\lambda$ different from the operating reference wavelength $\lambda_0$ comes to be incident at the operating reference temperature T ($|T - T_0|$ < 60 (°c) , or $|T - T_0|$ < 30 (°c) ) different from the operating reference temperature $T_0$, by the optical path difference providing function and the refracting function, it becomes almost zero. Accordingly, the minimum value of the wave front aberration of the converged light spot can be suppressed lower than the diffraction limit necessary for reading and writing the data onto the optical information recording medium.

(13) In the optical element described in any one of (9) - (12), it is characterized in that: the change rate by the temperature change $d\lambda/dT$, and $dn/dT$ of the wavelength $\lambda$ of the light flux incident on this optical element and the refractive index n of this optical element are respectively,

$$0.05 \ (nm/°C) < d\lambda/dT < 0.5 \ (nm/°C)$$

$$-0.0002 \ (/°C) < dn/dT < -0.00005 \ (/°C).$$

According to the example described in (13), because the change rate by the the temperature change $d\lambda/dT$, and $dn/dT$ of the wavelength $\lambda$ of the light flux incident on this optical element and the refractive index n of this optical element are respectively,

$$0.05 \ (nm/^{\circ}C) < d\lambda/dT < 0.5 \ (nm/^{\circ}C)$$

$$-0.0002 \ (/^{\circ}C) < dn/dT < -0.00005 \ (/^{\circ}C),$$

the accuracy of the reading and writing of the information onto the optical information recording medium is more increased.

(14) In the optical element described in any one of (9) - (13), it is characterized in that: the optical element is formed of plastic.

According to the example described in (14), the same effect as the example described in (6) is obtained.

[Mode for Carrying Out the Invention]

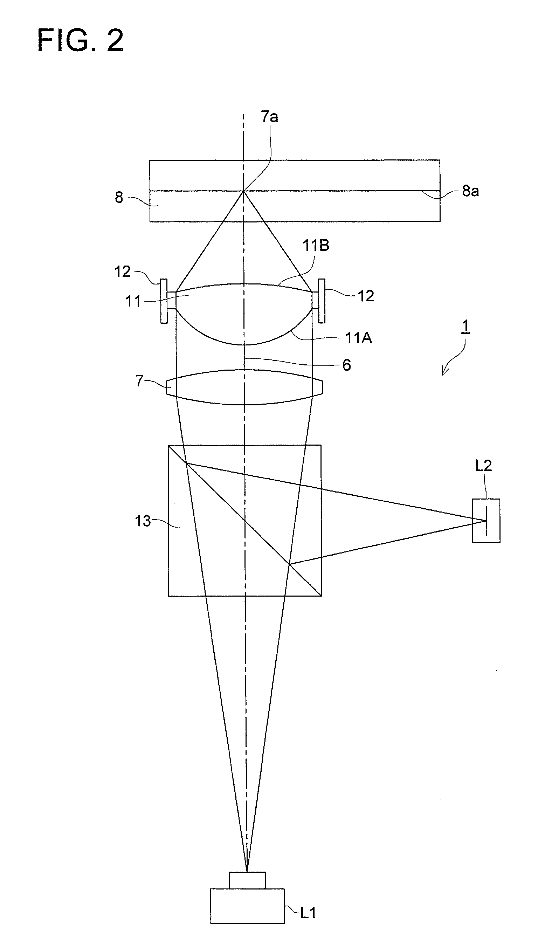

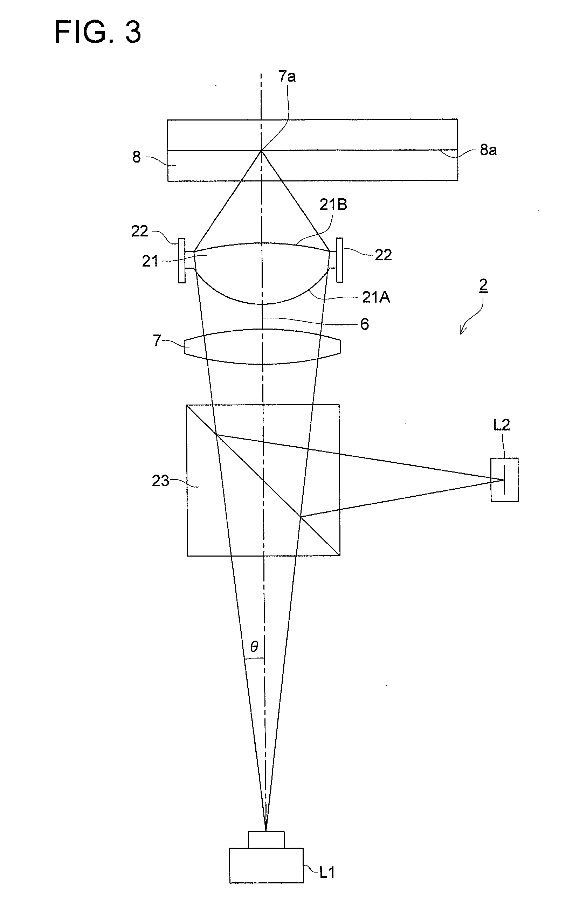

Referring to the drawings, the embodiment of the optical pickup apparatus and the optical element of the present invention will be described below. Fig. 2 and Fig. 3 are outline views of the overall structure of the optical pickup apparatus 1 and 2 of the first and second embodiments which will be described later. The optical pickup apparatus 1 and 2 of the first and second embodiments are structured such that the laser light flux in which the operating reference wavelengths $\lambda_0$ emitted from the laser oscillator L1 are respectively 785 nm, or 780 nm, is made to pass, in the first embodiment, the collimator lens 12 and the multi-ring-shaped zone phase difference lens 11 which will be described later, and in the second embodiment, made to pass the multi-ring-shaped zone phase difference lens 21, and is collected on the information recording surface 8a of the CD-RW 8 (optical information recording medium) on the optical axis 6, and the converged light spot is formed, and the reflected light from the information recording surface 8a of the CD-RW 8 is taken in the polarized light beam splitters 13 and 23, and the beam spot is formed again on the light receiving surface of the detector L2. The multi-ring-shaped zone phase difference lenses 11 and 21 are made movable in the optical axis 6 direction by the actuators 12 and 22.

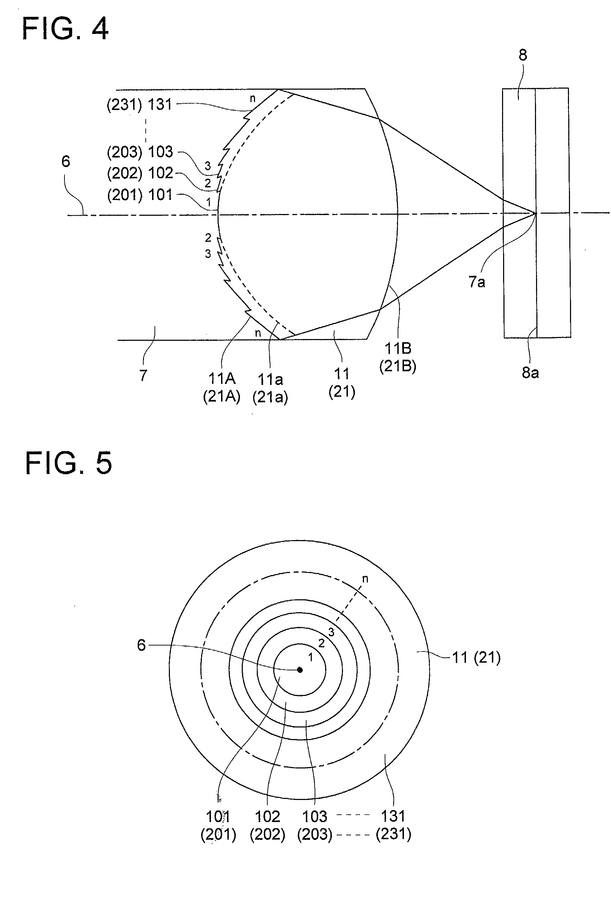

Fig. 4 and Fig. 5 are a side view and a front view showing the outline of the multi-ring-shaped zone phase difference lens 11 and 21 in the first and second embodiments. The multi-ring-shaped zone phase difference lenses 11 and 21 in the first and second embodiments are an example of the optical element in which the first optical element and the second optical element in the optical pickup apparatus according to the present invention are integrally formed, or the optical element according to the present invention.

[The first embodiment]

An optical pickup apparatus 1 of the present embodiment is designed for reading and writing of the CD-RW, and the operating reference temperature $T_0 = 25 \ ^{\circ}C$ and the operating reference wavelength $\lambda_0 = 785$ nm. Further, in each operating temperature $T = T_0 - 60 - T_0 + 60 \ (^{\circ}C)$, the multi-ring-shaped zone phase difference lens 11 of the optical system 1 is moved in the optical axis 7 direction by the actuator 12 so that the wave front aberration in the converged light spot 7a formed on the information recording surface 8a of the CD-RW 8 is minimum. At the operating reference temperature $T_0$, the system is designed such that the operating reference wavelength $\lambda_0 = 785$ nm, the numerical aperture NA of the optical system is 0.5, and the focal distance is 3.4 mm.

The outermost radius of the ring-shaped zone of the multi-ring-shaped zone phase difference lens 11 used for this optical pickup apparatus 1 is 1.720 mm, and the shape and the refractive index of the refractive surface (the first surface 11A, the second surface 11B) are set as follows.

The lens data of the multi-ring-shaped zone phase difference lens 11 is shown in Table 1.

Table 1

| Surface number | Radius of curvature R(mm) | Distance d on the optical axis (mm) | Refractive index n |
|---|---|---|---|
| object point | | $\infty$ | |
| 1 (aspheric surface) | 2.102 | 2.15 | 1.5336 |
| 2 (aspheric surface) | -9.730 | 0.85 | |
| 3 (cover glass) | $\infty$ | 1.2 | 1.57 |

Table 1   (continued)

| Surface number | Radius of curvature R(mm) | Distance d on the optical axis (mm) | Refractive index n |
|---|---|---|---|
| 4 | $\infty$ | | |
| Wavelength $\lambda$ = 785 nm | | | |

In Table 1, the surface numbers 1, 2 are respectively the first surface 11A and the second surface 11B of the multi-ring-shaped zone phase difference lens 11. The surface numbers 3, 4 are respectively the disk surface and the recording layer 8a of CD-RW8.

The shape of the fist surface 11A and the second surface 11B of the multi-ring-shaped' zone phase difference lens 11 are shown below. The first surface 11A is formed in such a manner that a basic aspheric surface (a mother aspheric surface) shown by a broken line in Fig. 4 is divided into the ring-shaped zones 101 - 131 on the concentric circle around the optical axis 6 in the 11a optical axis direction, and as it is apart from the optical axis, the thickness is increased. The step difference between adjoining 2 ring-shaped zones is set to the length in which the optical path difference of almost integer times of the operating reference wavelength $\lambda_0$ is generated between the light ray passing a certain ring-shaped zone and the light ray passing the adjoining ring-shaped zone, and the dislocation of the wave front is not generated.

The basic aspheric surface of the first surface 11A, and the second surface 11B of the multi-ring-shaped zone phase difference lens 11 are respectively formed of the aspheric surfaces which are symmetric around the optical axis 6, which are regulated by the arithmetical expression in which the coefficients shown in Table 2 are substituted in the following arithmetical expression.

$$X = \frac{(h^2/R)}{1+\sqrt{1-(1+K)(h/R)^2}}+\sum_{i=1}^{16} A_i h^i$$

Table 2

| The 1st surface | r=2.1019 |
|---|---|
| | K= -8.5827 x $10^{-1}$ |
| | A4= 4.4451 x $10^{-3}$ |
| | A6= 1.0564 x $10^{-3}$ |
| | A8=-1.0504 x $10^{-3}$ |
| | A10=8.1905 x $10^{-4}$ |
| | A12=-3.5505 x $10^{-5}$ |
| | A14= 7.7464 x $10^{-5}$ |
| | A16=-6.8784 x $10^{-6}$ |
| The 2nd surface | r=-9.7304 |
| | K= -1.8757 x 10 |
| | A4= 6.3908 x $10^{-3}$ |
| | A6= -8.6346 x $10^{-4}$ |
| | A8= 1.1224 x $10^{-2}$ |
| | A10=-1.5815 x $10^{-4}$ |
| | A12= 1.9798 x $10^{-5}$ |

The displacement amounts in the optical axis direction to the basic aspheric surface 11a of each of ring-shaped zones 101 - 131 formed on the first surface 11A of the multi-ring-shaped zone phase difference lens 11 are shown in Table 3. In table 3, in the displacement amounts in the optical axis 6 direction to the first ring-shaped zone, the direction from the first surface 11A of the multi-ring-shaped zone phase difference lens 11 toward the second surface 11B is defined as positive.

Table 3

| Ring shaped zone number | Inside diameter (mm) | Outside diameter (mm) | Displacement amount in the optical axis to the first ring-shaped zone (μm) |
|---|---|---|---|
| 1 | 0.000 | 0.395 | 0.00 |
| 2 | 0.395 | 0.551 | -1.48 |
| 3 | 0.551 | 0.666 | -2.97 |
| 4 | 0.666 | 0.761 | -4.47 |
| 5 | 0.761 | 0.841 | -5.97 |
| 6 | 0.841 | 0.911 | -7.49 |
| 7 | 0.911 | 0.974 | -9.01 |
| 8 | 0.974 | 1.031 | -10.54 |
| 9 | 1.031 | 1.083 | -12.08 |
| 10 | 1.083 | 1.131 | -13.63 |
| 11 | 1.131 | 1.175 | -15.18 |
| 12 | 1.175 | 1.217 | -16.74 |
| 13 | 1.217 | 1.256 | -18.31 |
| 14 | 1.256 | 1.292 | -19.88 |
| 15 | 1.292 | 1.326 | -21.46 |
| 16 | 1.326 | 1.359 | -23.05 |
| 17 | 1.359 | 1.390 | -24.65 |
| 18 | 1.390 | 1.420 | -26.25 |
| 19 | 1.420 | 1.448 | -27.86 |
| 20 | 1.448 | 1.475 | -29.47 |
| 21 | 1.475 | 1.501 | -31.10 |
| 22 | 1.501 | 1.526 | -32.72 |
| 23 | 1.526 | 1.550 | -34.36 |
| 24 | 1.550 | 1.573 | -36.00 |
| 25 | 1.573 | 1.596 | -37.64 |
| 26 | 1.596 | 1.618 | -39.29 |
| 27 | 1.618 | 1.639 | -40.95 |
| 28 | 1.639 | 1.660 | -42.61 |
| 29 | 1.660 | 1.680 | -44.28 |
| 30 | 1.680 | 1.700 | -45.95 |
| 31 | 1.700 | 1.720 | -47.63 |

In this manner, the multi-ring-shaped zone phase difference lens 11 is a lens of the shape obtained by shifting the surface of each ring-shaped zone in the optical axis direction so that the optical surface shape (basic aspheric surface) expressed by one aspheric surface expression is divided into a plurality of ring-shaped zones by the concentric circle around the optical axis, and the light ray passing the adjoining ring-shaped zone produces the optical path difference of almost integer times of the operating reference wavelength $\lambda_0$. In the lens in which the wave front aberration is almost no-aberration to the incident flux of the operating reference wavelength $\lambda_0$ at the operating reference temperature $T_0$, the inner diameter and the outer diameter of each ring-shaped zone are determined according to the method described in the 0010 paragraph, as shown in Table 3, and the surface of each ring-shaped zone is moved in parallel in the optical axis direction. When the ring-shaped zone is formed, although the optical path length of the light flux is changed, the displacement amount of each ring-shaped zone and the surface shape are adjusted (lens is designed again) so that the wave front aberration is minimum to the light flux of the operating reference wavelength $\lambda_0$, and the operating wavelength $\lambda$. By repeatedly conducting this, the displacement amount, inner diameter, outer diameter of each ring-shaped zone optimum to the light flux of the operating reference wavelength $\lambda_0$ and the operating wavelength $\lambda$, and the shape of the basic aspheric surface are determined.

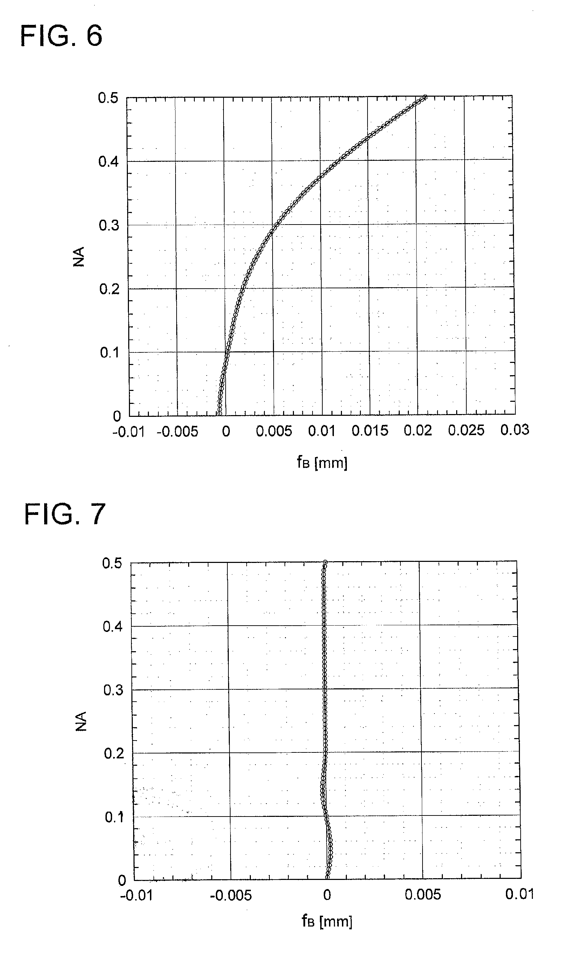

When the laser light flux 7 of the operating reference wavelength $\lambda_0$ (785 nm) comes to be incident on this multi-ring-shaped zone phase difference lens 11 at the operating reference temperature $T_0$, the longitudinal spherical aberration view by the refracting function of the multi-ring-shaped zone phase difference lens 11 is shown in Fig. 6. Further, when the laser light flux 7 of the operating reference wavelength $\lambda_0$ (785 nm) comes to be incident on the multi-ring-shaped zone phase difference lens 11 at the operating reference temperature $T_0$, the longitudinal spherical aberration view by the optical path difference providing function and the refracting function of the multi-ring-shaped zone phase difference lens 11 is shown in Fig. 7.

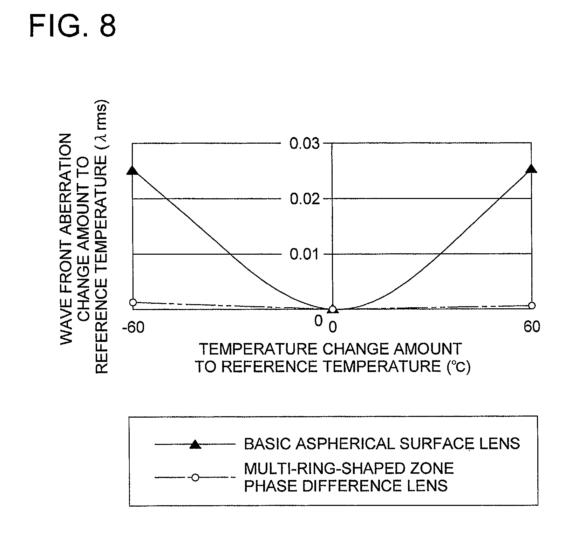

Further, when the light flux of the operating wavelength $\lambda$ comes to be incident on the multi-ring-shaped zone phase difference lens 11 at the operating temperature T of the range of the operating reference temperature $\pm$ 60 °C, the change of the wave front aberration in the converged light spot is shown in Fig. 8, as compared to the case of the "basic aspheric surface lens".

As shown in Fig. 8, the variation of wave front aberration in the converged light spot is about 0.027 $\lambda$rms at the maximum for the "basic aspheric surface lens", in contrast to this, for the multi-ring-shaped zone phase difference lens 11, it is stayed in about 0.001 $\lambda$rms.

[The second embodiment]

The optical pickup apparatus 2 of the present embodiment is designed for reading and writing of the CD-RW, and the operating reference temperature $T_0$ = 25 °C, and the operating reference wavelength $\lambda_0$ = 780 nm. Further, in each of operating temperatures T = $T_0$ - 60 - $T_0$ + 60 (C), the multi-ring-shaped zone phase difference lens 21 of the optical system 2 is moved in the optical axis 7 direction by the actuator 22 so that the wave front aberration in the converged light spot 7a formed on the information recording surface 8a of the CD-RW is minimum. In the operating reference temperature $T_0$, it is designed in such a manner that the operating reference wavelength $\lambda_0$ = 780 nm, the numerical aperture NA of the optical system is 0.5, and the focal distance is 2.72 mm.

The ring-shaped zone outermost radius of the multi-ring-shaped zone phase difference lens 21 used in this optical pickup apparatus 2 is 1.821 mm, and the shape of the refractive surface (the first surface 21A, the second surface 21B) and the refractive index are set as follows.

The lens date of the multi-ring-shaped zone phase difference lens 21 is shown in Table 4.

Table 4

| surface number | radius of curvature R (mm) | distance d on the optical axis (mm) | Refractive index n | | |
|---|---|---|---|---|---|
| | | | T=-35°C, $\lambda$=765nm | T=$T_0$ (°C), $\lambda$=$\lambda_0$ (nm) | T=85°C, $\lambda$=795nm |
| 0 | | $\infty$ | | | |
| 1 | 1.959 | 2.36 | 1.5331 | 1.5255 | 1.5180 |
| 2 | -3.098 | 1.63 | | | |
| 3 | $\infty$ | 1.2 | 1.57 | 1.57 | 1.57 |
| 4 | $\infty$ | | | | |

In Table 4, the surface numbers 1, 2 are respectively the first surface 21A and the second surface 21B of the multi-ring-shaped zone phase difference lens 21. The surface numbers 3, 4 are respectively the disk surface and the recording layer 8a of the CD-RW 8.

The shape of the first surface 21A and the second surface 21B of the multi-ring-shaped zone phase difference lens 21 is shown below. The first surface 21A is formed in such a manner that the basic aspheric surface 21a shown by a broken line in Fig. 4 is divided into the ring-shaped zones 201 - 231 on the concentric circle around the optical axis 6 in the optical axis direction, and as apart from the optical axis 6, the thickness is increased. The step difference between the adjoining 2 ring-shaped zones is set to the length in which the optical path difference of about integer times of the operating reference wavelength $\lambda_0$ is generated between the light ray passing a certain ring-shaped zone and the light ray passing its adjoining ring-shaped zone, and the dislocation of the wave front is not generated.

The basic aspheric surface of the first surface 21A and the second surface 21B of the multi-ring-shaped zone phase difference lens 21 are formed into the symmetric aspheric surface around the optical axis 6, regulated by the arithmetic expression in which the coefficients shown in Table 5 are respectively substituted in the "Expression 1".

Table 5

| Surface number | Radius of curvature R (mm) | Distance d on the optical axis (mm) | Refractive index n |
|---|---|---|---|
| object point | | $\infty$ | |
| 1 (aspheric surface) | 1.959 | 2.36 | 1.5255 |
| 2 (aspheric surface) | -3.098 | 1.63 | |
| 3 (cover glass) | $\infty$ | 1.2 | 1.57 |
| 4 | $\infty$ | | |
| Wavelength = 780 nm | | | |

The displacement amount in the optical axis to the basic aspheric surface 21a of each of ring-shaped zones 201 - 231 formed on the first surface 21A of the multi-ring-shaped zone phase difference lens 21 is shown in Table 6. In Table 6, in the displacement amount in the optical axis 6 direction to the first ring-shaped zone, the direction from the first surface 21A toward the second surface 21B of the multi-ring-shaped zone phase difference lens 21 is defined as positive.

Table 6

| Ring shaped zone number | Inside diameter (mm) | Outside diameter (mm) | Displacement amount in the optical axis direction to the first ring-shaped zone ($\mu$m) |
|---|---|---|---|
| 1 | 0.000 | 0.542 | 0.00 |
| 2 | 0.542 | 0.662 | -2.98 |
| 3 | 0.662 | 0.749 | -5.97 |
| 4 | 0.749 | 0.821 | -8.96 |
| 5 | 0.821 | 0.884 | -11.95 |
| 6 | 0.884 | 0.943 | -14.95 |
| 7 | 0.943 | 0.997 | -17.96 |
| 8 | 0.997 | 1.049 | -20.97 |
| 9 | 1.049 | 1.099 | -23.98 |
| 10 | 1.099 | 1.147 | -27.00 |
| 11 | 1.147 | 1.193 | -30.02 |
| 12 | 1.193 | 1.237 | -33.05 |
| 13 | 1.237 | 1.279 | -36.08 |
| 14 | 1.279 | 1.319 | -39.12 |
| 15 | 1.319 | 1.358 | -42.16 |
| 16 | 1.358 | 1.394 | -45.21 |
| 17 | 1.394 | 1.428 | -48.26 |

Table 6   (continued)

| Ring shaped zone number | Inside diameter (mm) | Outside diameter (mm) | Displacement amount in the optical axis direction to the first ring-shaped zone ($\mu$m) |
|---|---|---|---|
| 18 | 1.428 | 1.461 | -51.32 |
| 19 | 1.461 | 1.491 | -54.37 |
| 20 | 1.491 | 1.521 | -57.44 |
| 21 | 1.521 | 1.548 | -60.50 |
| 22 | 1.548 | 1.575 | -63.57 |
| 23 | 1.575 | 1.601 | -66.64 |
| 24 | 1.601 | 1.627 | -69.72 |
| 25 | 1.627 | 1.651 | -72.80 |
| 26 | 1.651 | 1.676 | -75.88 |
| 27 | 1.676 | 1.701 | -78.96 |
| 28 | 1.701 | 1.727 | -82.05 |
| 29 | 1.727 | 1.754 | -85.13 |
| 30 | 1.754 | 1.784 | -88.22 |
| 31 | 1.784 | 1.821 | -91.31 |

In this manner, the multi-ring-shaped zone phase difference lens 21 is a lens of the shape obtained by shifting the surface of each of ring-shaped zones in the optical axis direction so that the optical surface shape (basic aspheric surface) expressed by one aspheric surface expression is divided into a plurality of ring-shaped zones by the concentric circles around the optical axis, and the light ray passing the adjoining ring-shaped zone produces the optical path difference of about integer times of the operating reference wavelength $\lambda_0$. In the lens in which the wave front aberration is almost zero to the incident flux of the operating reference wavelength $\lambda_0$ at the operating reference temperature $T_0$, the inner diameter and the outer diameter of each ring-shaped zone are determined according to the method described in the 0010 paragraph, as shown in Table 6, and the surface of each ring-shaped zone is moved in parallel in the optical axis direction. When the ring-shaped zone is formed, although the optical path length of the light flux is changed, the displacement amount of each ring-shaped zone and the surface shape are adjusted (lens is designed again) so that the wave front aberration is minimum to the light flux of the operating reference wavelength $\lambda_0$, and the operating wavelength $\lambda$. By repeatedly conducting this, the displacement amount, inner diameter, outer diameter of each ring-shaped zone optimum to the light flux of the operating reference wavelength $\lambda_0$ and the operating wavelength $\lambda$, and the shape of the basic aspheric surface are determined.

When the laser light flux 7 of the operating reference wavelength $\lambda_0$ (780 nm) comes to be incident on this multi-ring-shaped zone phase difference lens 21, the longitudinal spherical aberration view by the refracting function of the multi-ring-shaped zone phase difference lens 21 is shown in Fig. 9. Further, when the laser light flux 7 of the operating reference wavelength $\lambda_0$ (780 nm) comes to be incident on the multi-ring-shaped zone phase difference lens 21, the longitudinal spherical aberration view by the optical path difference providing function and the refracting function of the multi-ring-shaped zone phase difference lens 21 is shown in Fig. 10.

Further, when the light flux of the operating wavelength $\lambda$ comes to be incident on the multi-ring-shaped zone phase difference lens 21 at the operating temperature T of the range of the operating reference temperature $T_0 \pm 60$ °C, the change of the wave front aberration in the converged light spot is compared to the case of "basic aspheric surface lens", and shown in Fig. 11.

As shown in Fig. 11, the variation of the wave front aberration in the converged light spot is about 0.217 $\lambda$ at the maximum for the "basic aspheric surface lens", and in contrast to this, it is stayed at about 0.022 $\lambda$ for the multi-ring-shaped zone phase difference lens 21.

In this connection, the optical pickup apparatus of the present invention and the optical element are not limited to the above-described each embodiment, but in the scope not departing from the spirit of the present invention, various improvements and the change of the design may be conducted. Further, also for the specific detail structure, it is of course that it can be appropriately changed.

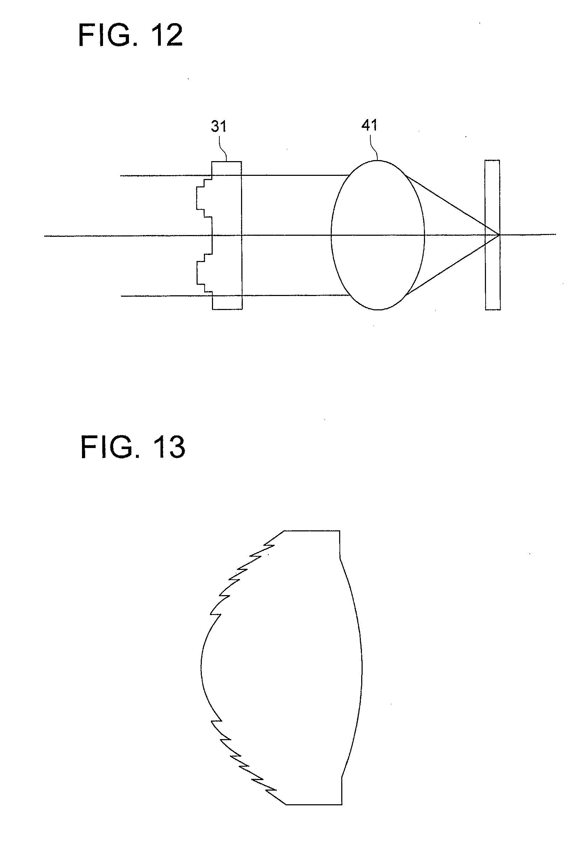

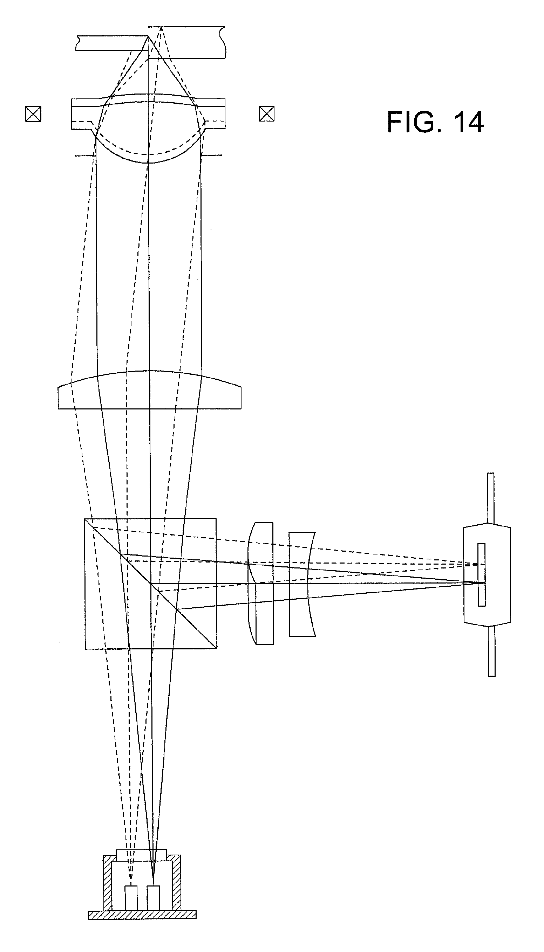

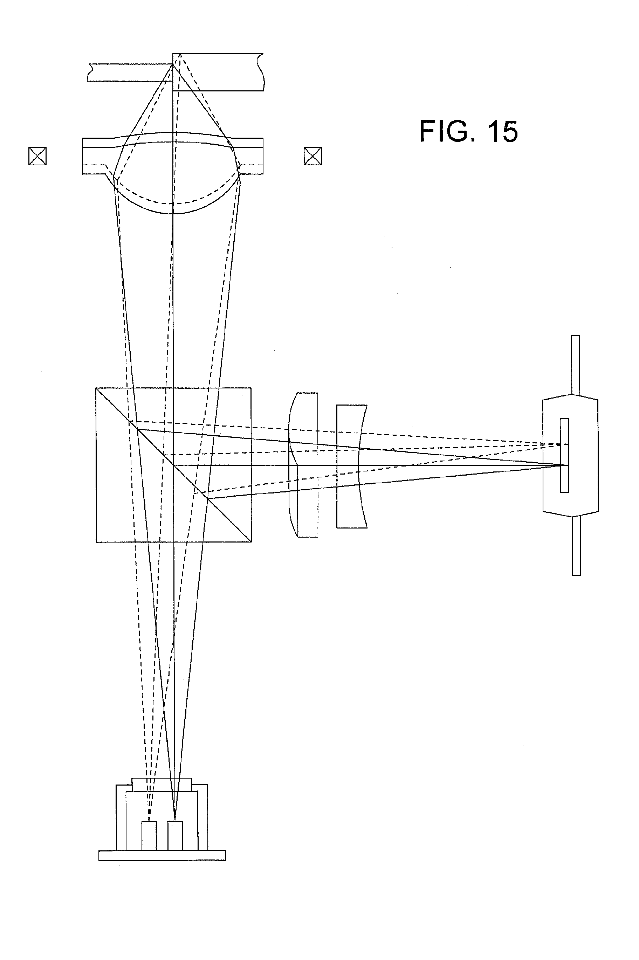

Furthermore, as shown in Fig. 12, the first optical element 31 having the optical path difference providing function and the second optical element 41 having the refracting function may be separately structured. According to such a structure, because the optical element design in which the optical path difference proving function and the refracting function are individually independently considered can be conducted; the degree of freedom of the design is spread. Further, by using the objective lens of the present invention shown in Fig. 13, the pickup apparatus shown in Fig. 14 can be structured. In the structure, when the light source which emits the laser of the wavelength of 780 nm, is used for one side light source, and the light source which emits the laser of the wavelength of 650 nm, is used for the other light source, the recording or reproducing for the CD and DVD can be conducted. Further, by using the objective lens of the present invention shown in Fig. 13, the pickup apparatus shown in Fig. 14 can be structured. The same light source as each light source shown in Fig. 14 is used for each light source, and the recording or reproducing for the CD and DVD can be conducted. The difference from the pickup apparatus shown in Fig. 14 is a point in which it is structured such that the definite light comes to be incident on the objective lens. By this structure, because it is not necessary that the collimator lens is used for the pickup apparatus shown in Fig. 15, the size of the whole pickup apparatus can be reduced.

According to the example of (1) or (2), when the light flux of the operating reference wavelength $\lambda_0$ at the operating reference temperature $T_0$ comes to be incident, there is no phase difference given by the first optical element, and the wave front aberration in the converged light spot is determined by the second optical element. The second optical element is designed as the aspheric surface in which the light ray aberration of its entrance surface and outgoing surface is no aberration. Accordingly, the light flux passing the first optical element and the second optical element is converged almost without aberration.

At the operating temperature T different from the operating reference temperature $T_0$ (in (1), $|T - T_0| < 60$ (°C) ; in (2), $|T - T_0| < 30$ (°C)), when the light flux of the operating wavelength $\lambda$ different from the operating reference wavelength $\lambda_0$ comes to be incident, from the influence of the dispersion of the second optical element and the temperature dependency of the refractive index of the second optical element, in the converged light spot by the optical system provided with the second optical element, the wave front aberration is generated. The relationship of the phase difference proving amount $\Psi(\lambda_0, T_0)$ by the optical path difference providing function of the first optical element and the difference d of the thickness in the optical axis direction of the ring-shaped zone is expressed by (Arithmetic 1) expression when $n(\lambda_0, T_0)$ is the refractive index, and k is integer. Herein, the difference d of the thickness of the ring-shaped zone means the difference of the thickness in the optical axis direction of the extension of a certain ring-shaped zone and the first ring-shaped zone including the optical axis. The first ring-shaped zone is expressed by the aspheric surface expression, and according to the expression, it is extended.

The changed amount $\Delta\Psi(T)$ of the phase difference providing amount when the temperature of the circumstance in which the optical system is placed, and the wavelength of the light flux incident on the optical system, are respectively changed from the operating reference temperature $T_0$ to the operating temperature T, and from the operating reference wavelength $\lambda_0$ to the operating wavelength $\lambda$ is expressed by the (Arithmetic 2) expression, in the case where the linear expansion coefficient of the optical element is $\alpha$, the changed amount of the incident wavelength is $\beta$, and the change of the refractive index of the optical element (the change of the refractive index by the changed amount $\beta$ of the incident wavelength is included) is $\gamma$, when the temperature is increased by a unit temperature. When the first optical element is formed of plastic, the changed amount of the phase difference providing in which the difference d of the thickness of the ring-shaped zone of the first optical element gives by the thermal expansion, is so small that it can be neglected, as compared to the changed amount of the phase difference providing amount by the temperature dependency of the refractive index of the first optical element or the changed amount of the phase difference providing amount by the temperature dependency of the incident wavelength.

As the result in which the thickness of the ring-shaped zone of the first optical element is formed in the direction in which the changed amount $\Delta\psi(T)$ of this phase difference providing amount and the wave front aberration generated by the change of the refractive index of the second optical element are cancelled with each other, there is a degree of freedom at the position on the optical axis at which the wave front aberration of the formed converged light spot is minimum. When the position is set on the under side more than the converged light spot position which is optimum when the light flux of the operating reference wavelength $\lambda_0$ comes to be incident at the operating reference temperature $T_0$, the phase difference given by the optical path difference providing function of the first optical element becomes long as the incident light flux goes far from the optical axis. Further, the difference d of the thickness of the ring-shaped zone, and the inner diameter and the outer diameter in the direction perpendicular to the optical axis of each ring-shaped zone are determined by the operating reference wavelength $\lambda_0$ of the target optical system, the raw material constituting the optical element, and the numerical aperture. Herein, "under" means that, as the incident light ray goes away from the optical axis, the position at which the incident light ray crosses the optical axis comes close to the second optical element. However, locally, or in the region of one portion in which the numerical aperture is high, the case where it crosses the optical axis at the further side than the optical element is also included.

According to the example described in (3), because the operating reference wavelength $\lambda_0$ is 700 nm $< \lambda_0 <$

800 nm, particularly it is appropriate for the reading and writing of the data onto the CD-RW.

In the example described in (4), the wave front error generated by the refracting function at the time of the temperature and wavelength change is increased as the numerical aperture is increased, on the under side more than the converged light spot which is optimum when the light flux of the operating reference wavelength $\lambda_0$ comes to be incident at the operating reference temperature $T_0$. Herein, the "wave front error" is the difference between the dislocation of the wave front of the paraxial light ray and the dislocation of the wave front of the light ray corresponding to the specific numerical aperture.

When the numerical aperture is small, the number of ring-shaped zones necessary for correcting the wave front aberration is almost equal to the result in which the maximum of the wave front aberration is divided by the changed amount $\Delta\psi(T)$ of the phase difference providing amount. However, when the first optical element and the second optical element are integrally formed, particularly as the numerical aperture is increased, the dislocation from the value is increased. In the position of the converged light spot in which the wave front aberration is minimum when the light flux of the operating reference wavelength $\lambda_0$ comes to be incident, by making the wave front aberration when the wavelength is changed, have the width in the range necessary for the reading and writing of the data onto the optical information recording medium, even when the number of ring-shaped zones is smaller than the result in which the maximum of the wave front aberration is divided by the changed amount $\Delta\psi(T)$ of the phase difference providing amount, the reading error is not generated at the time of temperature change. In order to read write the data onto the CD-RW, it is preferable that the number of ring-shaped zones is 3 - 60. Further, generally, as the number of ring-shaped zones is smaller, the wave front aberration is more increased, however, there is an advantage that the processing of the optical element becomes easy.

According to the example described in (5), because the change rate by the temperature of the wavelength $\lambda$ and the refractive index n of the second optical element d$\lambda$/dT, dn/dT are respectively

$$0.05 \ (nm/^{\circ}C) < d\lambda/dT < 0.5 \ (nm/^{\circ}C)$$

-0.0002 ($/^{\circ}C$) < dn/DT < -0.00005 ($/^{\circ}C$), the accuracy of the reading and writing of the information onto the optical information recording medium is more enhanced.

According to the example described in (6), the same effect as the example described in any one of (1) - (6) is obtained, and because the first optical element and the second optical element are formed of plastic, the molding of the first optical element and the second optical element is easily conducted, and because the cost of the raw material is also lower than the glass and the weight is light, the weight and the cost of optical pickup apparatus can be made light and low.

In the example described in (7) or (8), when the light flux of the operating reference wavelength $\lambda_0$ at the operating reference temperature $T_0$, the spherical aberration by the refracting function of this optical element is designed so that it is over. However, because this optical element has both the refracting function and the optical path difference proving function, the same effect as the case where the thickness of the optical element is practically increased is generated to the incident light ray. As shown in Fig. 1, as compared to the light ray passing the optical element having only the refracting function, the optical path length in the optical element of the light ray passing the optical element having both the refracting function and the optical path difference providing function is increased, and as the result, the spherical aberration which is over by the refracting function of the optical element is subjected to the action to be under and becomes almost no-aberration.

Herein, "over" means that, as the incident light ray goes away from the optical axis, the position at which the incident light ray crosses the optical axis comes near to the optical element. Further, "under" used herein is the reversal to the over, and means that, as the incident light ray goes away from the optical axis, the position at which the incident light ray crosses the optical axis comes near to the optical element. However, locally, or in the region of a portion in which the numerical aperture is high, the case where it crosses the optical axis at the far side from the optical element is also included.

In the optical element described in (7) or (8), in the relational expression of the phase difference providing amount by the optical path difference providing function and the difference d of the thickness in the optical axis direction of the ring-shaped zone, the factor such as the refractive angle of the light ray incident on the entrance surface of the optical element, is also included, and the expression becomes complicated, but the basic technology is the same as the example described in (1) or (2). When the surface shape of the aspheric surface having the refracting function is simply shifted in the optical axis direction by the optical path length difference, there is case where the element having both the optical path difference providing function and the refracting function as the single body optical element is obtained. However, when the numeral aperture is increased, and the radius of curvature of the surface of the optical element is reduced, because the necessity in which the optical path length is severely considered is generated, by only shifting the surface shape of the aspheric surface having the refracting function in the optical axis direction by the optical path length difference, there is a case where the above-described function can not be attained. In such a case, when the shape of the refractive surface by which the refracting function is performed, is also changed, the optical element having both the optical path difference providing function and the refracting function is obtained.

In this manner, because the wave front aberration at the position in the optical axis direction at which the wave front aberration of the converged light spot is minimum, when the temperature of the circumstance in which the optical system is placed, and the wavelength incident on the optical system are changed, is not larger than $0.14\lambda$ in the example described in (7), and not larger than $0.07\lambda$ in the example described in (8), the intensity of the converged light spot can be made appropriate for reading and writing the data onto the optical information recording medium.

According to the example described in (9), the same effect as the example described in (3) is obtained.

According to the example described in (10), the same effect as the example described in (4) is obtained.

According to the example described in (11), the same effect as the example described in (9) or (10) is obtained, and the light flux incident on the optical element is formed of almost parallel light ray to the optical axis, and in this light flux, because the distance between the position at which the light ray passing the optical element at the position most apart from the optical axis crosses the optical axis by the refracting function, and the position at which the paraxial light ray crosses the optical axis by the refracting function, is not larger than 0.03 mm, when the light flux of the operating reference wavelength $\lambda_0$ comes to be incident at the operating reference temperature $T_0$, it is almost no aberration by the optical path difference providing function and the refracting function.

Further, when the light flux of the operating wavelength $\lambda$ different from the operating reference wavelength $\lambda_0$ at the operating reference temperature T ($|T - T_0| < 60$ (°C) , or $|T - T_o| < 30$ (°C) ) different from the operating reference temperature $T_0$, comes to be incident, by the optical path difference providing function and the refracting function, it is almost no aberration. Accordingly, it can be suppressed to not larger than the diffraction limit necessary for reading and writing the data onto the optical information recording medium.

According to the example described in (12), the same effect as the example described in (9) or (10) is obtained, and the light flux incident on the optical element is formed of the light ray emitted in the inclination angle range of 12.5 degrees to the optical axis from the light source positioned on the optical axis, and in this light flux, because the distance between the position at which the light ray passing the optical element at the position most apart from the optical axis crosses the optical axis by the refracting function, and the position at which the paraxial light ray crosses the optical axis by the refracting function, is not larger than 0.02 mm, when the light flux of the operating reference wavelength $\lambda_0$ comes to be incident at the operating reference temperature $T_0$, it is almost no aberration by the optical path difference providing function and the refracting function.

Further, when the light flux of the operating wavelength $\lambda$ different from the operating reference wavelength $\lambda_0$ at the operating reference temperature T ($|T - T_0| < 60$ (°C) , or $|T - T_o| < 30$ (°C) different from the operating reference temperature $T_0$, comes to be incident, by the optical path difference providing function and the refracting function, it is almost no aberration. Accordingly, the wave front aberration minimum value of the converged light spot can be suppressed to not larger than the diffraction limit necessary for reading and writing the data onto the optical information recording medium.

According to the example described in (13), because the change rates $d\lambda/dT$ and $dn/dT$ by the temperature change, of the wavelength $\lambda$ of the light flux incident on this optical element and the refractive index n of this optical element are respectively,

$$0.05 \text{ (nm/°C)} < d\lambda/dT < 0.5 \text{ (nm/°C)}$$

$$-0.0002 \text{ (/°C)} < dn/dT < -0.00005 \text{ (/°C)},$$

the accuracy of the reading and writing of the information onto the optical information recording medium is more enhanced.

According to the example described in (14), the same effect as the example described in (6) is obtained.

Further, the structure of the invention is suitable for reading data from and writing data on CD-RW, DVD and high density DVD. Incidentally, the high density DVD means an optical information recording medium that is mostly the same as DVD in size, and is larger than DVD in terms of capacity.

In the structure of the invention, it is not necessary to provide a collimator lens for converting divergent ray of light into a prarellel light flux between a laser light source and the first optical element. It is therefore possible to make the structure of an optical pickup device to be smaller by an amount equivalent to the collimator.

In the structure of the invention, it is possible to read data from and write data on both the first optical information recording medium and the second optical information recording medium each having a different thickness of a base board. Namely, the optical pickup device may have interchangeability for the first optical information recording medium and the second optical information recording medium.

In the structure of the invention, "A part of an optical functional surface" is an area on the optical functional surface through which a ray of light whose numerical aperture is greater than NA2 and is not greater than NA1 passes.

It is possible to restrain wavefront aberration that is caused by temperature changes of an optical pickup device, without having an influence on reading data from and writing data on the second optical information recording medium, in the course of reading data from and writing data on the first optical information recording medium. In other words, it is possible to enhance reliability for reading data from and writing data on the second optical information recording medium, without changing reliability for reading data from and writing data on the first optical information recording medium.

In the structure of the invention, the converged spot in this case means a convergence portion where a ray of light is converged so that information may be recorded or reproduced.

By causing light fluxes having respectively wavelengths of λ1 and λ2 to enter the interchangeable structure, data can surely be read from and written on the first optical information recording medium and the second optical information recording medium.

In the structure of the invention, it is possible to restrain wavefront aberration caused by temperature changes of an optical pickup device to the level which does not cause a problem for recording or reproducing.

In the structure of the invention, a function to give an optical path difference and a refraction function can be designed independently, which makes the design to be easier. It is further possible to cause the second optical element to have further optical function.

**Claims**

1. An optical element for use in an optical pickup apparatus for converging a light flux onto an information recording plane of an optical information recording medium, comprising:

   an optical path difference providing section having a function of providing an optical path difference, the optical path difference providing section is divided coaxially around an optical axis so as to form a plurality of ring-shaped zones each of which has a respective different thickness along the direction of the optical axis so that optical path difference providing section makes the length of an optical path of a light ray having passed through a ring-shaped zone among the plurality of ring-shaped zones longer than the length of an optical path of a light ray having passed through a neighboring ring-shaped zone located next to an optical axis side of the ring-shaped zone by a length obtained by multiplying an operating reference wavelength $\lambda_0$ with an integer; and
   a refracting section having a refracting function of optimizing a spherical aberration of a converged light spot of a light flux which has the operating reference wavelength $\lambda_0$ and is converged onto the information recording plane;

   wherein the optical element converges a light flux having the operating reference wavelength $\lambda_0$ onto the information recording plane with almost no aberration under an operating reference temperature $T_0$, and the optical element converges a light flux having an operating wavelength $\lambda$ different from the operating reference wavelength $\lambda_0$ onto the information recording plane with a wavefront aberration of $0.14\lambda$rms or less under an operating temperature T ($|T - T_0| < 60$ [°C]).

2. The optical element of claim 1, wherein the optical element converges a light flux having an operating wavelength $\lambda$ different from the operating reference wavelength $\lambda_0$ onto the information recording plane with a wavefront aberration of $0.07\lambda$rms or less under an operating temperature T ($|T - T_0| < 30$ [°C]).

3. The optical element of claim 1, wherein when a light flux consisting of light rays each substantially parallel to the optical axis comes to be incident into the optical element, the optical element makes a distance between a position where a light ray which passes through the optical element at the farthest position from the optical axis among the light flux intersects the optical axis by being refracted by the refracting function and a position where a paraxial light ray intersects the optical axis by being refracted by the refracting function to be 0.03 mm or less.

4. The optical element of claim 1 or 2, wherein the operating reference wavelength $\lambda_0$ satisfies the following formula:

$$400 \text{ nm} \leqq \lambda_0 \leqq 800 \text{ nm}$$

**5.** The optical element of claim 4, wherein the operating reference wavelength $\lambda_0$ satisfies the following formula:

$$700 \text{ nm} \leqq \lambda_0 \leqq 800 \text{ nm}$$

**6.** The optical element of claim 4 or 5, wherein the number of the plurality of ring-shaped zones is 3 to 60.

**7.** The optical element of claim 1 or 2, wherein the optical element is structured such that a divergent light flux comes to be incident into the optical element.

**8.** The optical element of claim 7, wherein the optical element allows a light flux having a wavelength $\lambda_0$ to pass through when recording or reproducing is conducted for a first optical information medium with a predetermined substrate thickness and allows a light flux having a wavelength $\lambda_1$ ($\lambda_0 < \lambda_1$) to pass through when recording or reproducing is conducted for a second optical information medium with a substrate thickness of the predetermined substrate thickness or more.

**9.** The optical element of claim 8, wherein the following formula is satisfied:

$$600 \text{ nm} \leqq \lambda_0 \leqq 700 \text{ nm}$$

$$700 \text{ nm} \leqq \lambda_1 \leqq 800 \text{ nm}$$

**10.** The optical element of claim 9, wherein the optical element comprises the plurality of ring-shaped zones on a partial region on a surface thereof, converges a light flux having the wavelength $\lambda_1$ and having passed through the plurality of ring-shaped zones on a condition capable of recording or reproducing the first optical information recording medium, and does not converge a light flux having the wavelength $\lambda_2$ and having passed through the plurality of ring-shaped zones on a condition capable of recording or reproducing the second optical information recording medium.

**11.** The optical element of claim 10, wherein the optical element comprises a compatible structure at a region other than the partial region on the surface, converges a light flux having the wavelength $\lambda_1$ and having passed through the compatible structure on a condition capable of recording or reproducing the first optical information recording medium, and converges a light flux having the wavelength $\lambda_2$ and having passed through the compatible structure on a condition capable of recording or reproducing the second optical information recording medium.

**12.** The optical element of claim 11, wherein the compatible structure is a diffractive structure.

**13.** The optical element of claim 11, wherein the compatible structure is structured such that a proceeding direction of a light ray is the same direction with a refracting direction by each of the plurality of ring-shaped zones and a phase $\Phi$ of a wavefront having passed through each of the plurality of ring-shaped zones satisfies the following formula at a position of an image plane where the wavefront aberration of a converged light spot becomes the minimum.

$$- 0.5 \, \pi \leqq \Phi \leqq 0.5 \, \pi$$

**14.** The optical element of claim 7, wherein when a light flux consisting of light rays each inclined at an angle of 12.5 degrees or less to the optical axis comes to be incident into the optical element, the optical element makes a distance between a position where a light ray which passes through the optical element at the farthest position from the optical axis among the light flux intersects the optical axis by being refracted by the refracting function and a position where a paraxial light ray intersects the optical axis by being refracted by the refracting function to be 0.02 mm or less.

**15.** The optical element of claim 1 or 2, wherein the following formulas are satisfied:

$$0.05 \, (\text{nm}/^\circ\text{C}) < d\lambda/dT < 0.5 \, (\text{nm}/^\circ\text{C})$$

$$- 0.0002 \, (/^\circ C) < dn/dT < - 0.00005 \, (/^\circ C)$$

where $\lambda$ is an operating wavelength of a light flux coming to be incident into the optical element, n is a refractive index of the optical element, and $d\lambda/dT$ and $dn/dT$ are a changing rate for a temperature change respectively.

16. The optical element of any of claims 1 to 15, wherein the optical element is made of a plastic.

17. The optical element of any of claims 1 to 15, wherein the optical element comprises a first optical element having the optical path difference providing section and a second optical element having the refracting section.

18. An optical pickup apparatus for converging a light flux onto an information recording plane of an optical information recording medium, comprising an optical element in accordance with any one of the preceding claims located on an optical axis of an optical system of the optical pickup apparatus.

# FIG. 1

------- OPTICAL PATH OF LIGHT RAY
BY REFRACTIVE FUNCTION

————— OPTICAL PATH OF LIGHT RAY BY REFRACTIVE
FUNCTION AND OPTICAL PATH DIFFERENCE
PROVIDING FUNCTION

# FIG. 2

# FIG. 3

## FIG. 4

## FIG. 5

## FIG. 6

## FIG. 7

# FIG. 8

WAVE FRONT ABERRATION CHANGE AMOUNT TO REFERENCE TEMPERATURE ($\lambda$ rms)

TEMPERATURE CHANGE AMOUNT TO REFERENCE TEMPERATURE (°C)

0.03

0.02

0.01

-60    0    60

▲ BASIC ASPHERICAL SURFACE LENS

○ MULTI-RING-SHAPED ZONE PHASE DIFFERENCE LENS

26

## FIG. 9

## FIG. 10

# FIG. 11

WAVE FRONT ABERRATION CHANGE AMOUNT TO REFERENCE TEMPERATURE ($\lambda$ rms)

0.03

0.02

0.01

- 60

0

60

TEMPERATURE CHANGE AMOUNT
TO REFERENCE TEMPERATURE (℃)

BASIC ASPHERICAL SURFACE LENS

MULTI-RING-SHAPED ZONE
PHASE DIFFERENCE LENS

## FIG. 12

## FIG. 13

FIG. 14

FIG. 15